# FASCICULE DE BREVET EUROPEEN

(11) **EP 3 688 338 B1**
(45) Date de publication et mention de la délivrance du brevet: **21.01.2026**
(21) Numéro de dépôt: 18773447.0
(22) Date de dépôt: 24.09.2018
(51) Int. Cl.: F16G 13/20, B01J 8/00

(54) **DISPOSITIF DE SUPPORT POUR UNE CHAINE BOUTANTE POURVUE D'ERGOTS DE SUPPORT**
STÜTZVORRICHTUNG FÜR EINE MIT STÜTZSTIFTEN VERSEHENE STARRE KETTE
SUPPORT DEVICE FOR A RIGID CHAIN PROVIDED WITH SUPPORT PINS

(30) Priorité: 29.09.2017 FR 1759089
(43) Date de publication de la demande: 05.08.2020
(73) Titulaire: TotalEnergies OneTech, 92400 Courbevoie (FR)
(72) Inventeur: GALASSINI, Giuseppe, 00040 Santa Maria delle Mole (Marino-Rome-Italie) (IT); GASSMANN, Nicolas, 76190 Baons le Comte (FR)
(74) Mandataire: Fédit-Loriot
(86) Numéro de dépôt international: PCT/EP2018/075814
(87) Numéro de publication internationale: WO 2019/063487

(56) Documents cités:
- WO-A1-2013/186497
- DE-A1- 102014 007 458
- US-A- 2 432 411
- US-A- 5 193 660
- US-A1- 2010 140 572

## Description

L'invention concerne un dispositif de support pour une chaîne boutante pourvue d'ergots de support, notamment pour élément fonctionnel. Le dispositif de support est plus particulièrement adapté à une utilisation dans un réacteur industriel pour introduire un ou plusieurs éléments fonctionnels à l'intérieur du réacteur via la chaîne boutante.

Dans de nombreux domaines industriels, il est nécessaire de charger des particules solides dans une enceinte, en particulier dans un réacteur, notamment de type chimique, électrochimique, pétrolier ou pétrochimique. Les particules solides sont en général introduites par une ouverture de remplissage du réacteur située en haut du réacteur et au centre de celui-ci, cette introduction étant effectuée au moyen d'un dispositif de chargement approprié. Ce type de chargement est habituellement suivi et contrôlé afin d'obtenir des conditions de chargement optimales. A cet effet, on peut disposer une ou plusieurs sondes (ou capteurs) de mesure à l'intérieur du réacteur, en particulier pendant le remplissage. Plus généralement, on installe des sondes à l'intérieur du réacteur afin de mesurer des paramètres relatifs au suivi du chargement des particules solides dans l'enceinte.

L'installation dans le réacteur d'un tel système de distribution, incluant notamment le dispositif de chargement des particules et les supports de sonde, peut néanmoins être relativement délicate à effectuer. L'une des contraintes principales à laquelle les opérateurs de ce type de matériel peuvent être confrontés est liée à l'encombrement interne parfois extrême d'un réacteur, lequel peut contenir des plateaux, des thermocouples et des supports pour ces éléments. Cette contrainte est donc liée au faible espace dont les opérateurs disposent pour manœuvrer le dispositif de chargement en vue de son installation et de ses réglages. Le document DE102014007458 décrit un dispositif de support similaire.

Le document WO2013186497 décrit un système de distribution de particules solides dans une enceinte pouvant être positionné avec davantage de souplesse. Notamment, un dispositif support de capteur est monté déplaçable par rapport au dispositif de chargement. Dans un mode de réalisation, ce dispositif support comprend une chaîne boutante et un élément de guidage pour guider la chaine boutante de sorte qu'une portion de la chaine à une sortie de cet élément de guidage s'étende (selon sa longueur) suivant une direction différente de celle d'une portion de la chaine à l'entrée de l'élément de guidage. Ce dispositif permet de déporter un capteur porté par la chaîne boutante. Néanmoins, le capteur est mis en place sur la chaîne boutante au niveau de la partie de celle-ci située en aval de l'élément de guidage par rapport à un mouvement de la chaîne en direction du réacteur, en général à l'intérieur du réacteur. Cette mise en place peut s'avérer difficile, notamment du fait du manque de lumière, de la température à l'intérieur du réacteur et de l'espace exigu. Le temps de mise en place peut ainsi être relativement long et retarder le chargement et la mise en route du réacteur. En outre, le capteur est généralement suspendu manuellement à la chaîne boutante, de sorte son positionnement n'est pas très précis et n'est pas toujours reproductible d'une opération de chargement à une autre. Du fait de la suspension, le capteur est susceptible de bouger pendant les mesures. La qualité du suivi du chargement peut ainsi être dégradée par le manque de précision dans le positionnement du capteur et/ou les mouvements de celui-ci. Par ailleurs, le capteur est souvent suspendu relativement bas, par exemple à un bras, ce qui peut réduire sa capacité à mesurer le profile de chargement dans la mesure où ce type de capteur présente habituellement par conception, une zone morte de mesure sur les derniers 500 mm.

De plus, la plupart du temps, il est nécessaire de modifier le capteur pour pouvoir le suspendre : il arrive ainsi que le capot du capteur soit percé pour permettre sa fixation, ce qui peut le détériorer, notamment suite à la pénétration d'eau.

Il existe un besoin pour améliorer le positionnement d'un élément fonctionnel supporté par un dispositif de support, notamment pour un système de distribution de particules solides dans une enceinte.

A cet effet, l'invention concerne un dispositif de support d'au moins un élément fonctionnel, comprenant :
- une chaîne de support boutante formée d'une pluralité de maillons articulés deux à deux par des galets dont les axes sont parallèles et agencés de sorte que la chaîne ne peut se courber que dans une seule direction depuis un état rectiligne,
- un boîtier de support fermé pourvu d'un logement interne présentant une première extrémité débouchant sur une face d'entrée du boîtier de support et une deuxième extrémité débouchant sur une face de sortie du boîtier de support, distincte de la face d'entrée, le logement interne définissant un chemin de chaîne pour recevoir et guider la chaine de support depuis la face d'entrée jusqu'à la face de sortie.

Le dispositif de support comporte en outre au moins un support qui est un support d'élément fonctionnel tel que défini dans la revendication 1.

On comprend ainsi que le logement interne guide tout déplacement de la chaîne de support selon sa longueur. Notamment, le chemin de chaîne reçoit et guide la chaine de support de sorte qu'une portion de la chaine à la sortie du logement interne s'étende (selon sa longueur) suivant une direction différente de celle d'une portion de la chaine à l'entrée du logement interne.

Selon l'invention, le dispositif de support est tel que :
- la chaîne est équipée d'au moins un ergot de support solidaire d'un maillon, l'(les) ergot(s) de support saillant d'un seul côté de la chaîne, parallèlement aux axes des galets de maillon,
- une face du boîtier s'étendant sensiblement perpendiculairement aux axes des galets présente une rainure traversante communiquant avec le logement interne, cette rainure s'étendant sur toute la longueur de celui-ci et présentant des dimensions, dans un plan perpendiculaire aux axes des galets, suffisantes pour ne laisser passer que l'(les) ergot(s) de support, l'(les) ergot(s) de support traversant la rainure et faisant saillie hors du boîtier de support d'une longueur prédéterminée.

Notamment, la rainure peut présenter une dimension, suivant une direction perpendiculaire à une longueur de la chaîne et aux axes des galets, suffisante pour laisser passer (les) ergot(s) de support et inférieure à la dimension d'un maillon.

Cette longueur prédéterminée est avantageusement suffisante pour permettre de fixer un élément fonctionnel à l'ergot de support. Il est ainsi possible de fixer un élément fonctionnel sur un ergot de support, notamment quelle que soit la position de l'ergot de support sur la chaîne et quelle que soit la position relative de la chaîne et du boîtier de support.

Ainsi, un élément fonctionnel peut être fixé à la chaîne de support bien en amont du boîtier de support suivant une direction de déplacement de la chaine selon la longueur. Ceci permet de faciliter la mise en place d'un élément fonctionnel, en particulier lorsque la partie de la chaîne en aval du boîtier fonctionnel est difficile d'accès, de sorte que le temps d'installation de l'élément fonctionnel est réduit. Notamment, cette mise en place peut être effectuée en dehors d'une enceinte à l'intérieur de laquelle l'élément fonctionnel doit être introduit : ainsi, ce montage peut être effectué en avance, alors que le dispositif de support n'est pas encore installé dans l'enceinte. On réduit ainsi davantage le temps pendant lequel l'enceinte ne peut être utilisée du fait de l'installation de ce type d'équipement.

On comprend également que l'(s) ergot(s) de support étant solidaires de la chaîne de support, il est possible de positionner précisément et avec répétabilité un élément fonctionnel sur la chaîne de support. Enfin, l'ergot de support étant rigide et non déformable, l'élément fonctionnel peut y être fixé rigidement, sans aucun degré de liberté. L'élément fonctionnel peut également être monté au plus près de la chaîne, on gagne ainsi en hauteur utile, par exemple en hauteur de chargement, à l'intérieur d'une enceinte recevant le dispositif de support. Lorsque cet élément fonctionnel est un capteur, on améliore aussi sa capacité de mesure. A titre d'exemple, pour un capteur présentant une zone morte sur les derniers 500 mm de mesure un gain de 200 / 300 mm peut être observé.

Le dispositif de support selon l'invention peut en outre présenter une ou plusieurs des caractéristiques suivantes :
- Ledit au moins un ergot de support s'étend dans le prolongement d'un galet du maillon qui le supporte. Ceci peut permettre de faciliter la réalisation de l'ergot de support. Avantageusement, ledit au moins un ergot de support peut alors être réalisé d'une pièce avec un galet de maillon. En variante, il peut être fixé de façon amovible au galet du maillon. Le galet peut par exemple présenter une forme cylindrique, éventuellement pourvue d'un alésage interne, ou tronconique, et l'ergot peut être inséré à l'intérieur du galet par emboîtement, vissage ou autre.
- La chaîne de support comporte une pluralité d'ergots de support répartis sur la longueur de la chaîne. Ceci permet la fixation de différents éléments fonctionnels le long de la chaîne de support.
- La chaîne de support comporte au moins un support choisi parmi un support d'élément fonctionnel et un support de câble. Notamment, ce support peut être agencé pour maintenir l'élément fonctionnel ou le câble sans les détériorer, notamment sans perçage. Le support d'élément fonctionnel peut comprendre un arceau fixé à l'ergot de support, dont les positions relatives peuvent être réglables suivant un degré de liberté avant fixation, et une pièce de fixation de l'élément fonctionnel fixée à l'arceau, dont les positions relatives peuvent être réglables suivant un autre degré de liberté avant fixation. Cette pièce de fixation peut recevoir une partie de l'élément fonctionnel. Le support de câble peut comporter au moins un logement ouvert fermé par un élément de fermeture.

L'ergot de support peut présenter un alésage fileté d'axe confondu avec l'axe d'un galet et ledit au moins un support peut alors être fixé à l'ergot de support par une vis, notamment une vis à molette, permettant sa fixation sans outils.
- Le boîtier comprend deux carters définissant le logement interne et assemblés suivant un plan perpendiculaire aux axes des galets, lesdits carters maintenant entre eux au moins un rail de guidage inférieur et au moins un rail de guidage supérieur pour guider les galets, l'un des carters étant formé de deux parties distinctes espacées définissant entre elles la rainure. Le boîtier peut ainsi être réalisé de manière simple.

On notera que l'invention peut également avoir pour objet la chaîne de support boutante pourvue d'ergots de support précédemment décrite, éventuellement équipée d'au moins un support choisi parmi un support d'élément fonctionnel et de support de câble, tel que précédemment décrit.

L'invention concerne également un système de suivi de la distribution de particules solides à l'intérieur d'une enceinte, comprenant :
- au moins un dispositif de support selon l'invention,
- au moins un élément fonctionnel fixé à un ergot de support prédéterminé de la chaîne de support d'un dispositif de support, notamment par un support d'élément fonctionnel, ledit élément fonctionnel étant un capteur apte à collecter des informations sur le chargement de l'enceinte.

Avantageusement, ledit au moins un élément fonctionnel peut être fixé rigidement à l'ergot de support, sans possibilité de mouvement par rapport à l'ergot de support. Ceci peut permettre d'améliorer la qualité des informations relevées par le capteur et d'améliorer ainsi le suivi.

Avantageusement, ledit au moins un élément fonctionnel peut être relié à au moins un câble d'alimentation électrique et/ou de transfert d'information. Le ou les câbles peuvent alors être fixés à au moins un autre ergot de support, notamment par un support de câble. Ceci peut permettre de limiter une détérioration du câble lors du déplacement de la chaîne de support et aussi d'éviter le passage d'un câble devant l'élément fonctionnel au risque de perturber la collecte des informations. Cela permet également d'éviter que le câble ne se prenne dans des éléments avoisinant le dispositif de support, notamment lorsque celui-ci est à l'intérieur d'une enceinte. Lorsque ces éléments avoisinants sont mobiles, on peut en effet observer un arrachement du câble.

Un tel système de suivi peut avantageusement être utilisé pour suivre le chargement en particules solides dans une enceinte, notamment dans un réacteur de type chimique, électrochimique, pétrolier ou pétrochimique.

L'invention a également pour objet un procédé d'installation d'un système de suivi de la distribution de particules solides à l'intérieur d'une enceinte, ledit système de suivi comprenant :
- au moins un dispositif de support d'au moins un élément fonctionnel selon l'invention,
- au moins un élément fonctionnel fixé à un ergot de support prédéterminé de la chaîne de support, ledit élément fonctionnel étant un capteur apte à collecter des informations sur le chargement de l'enceinte.

Selon l'invention, le procédé comprend :
- une étape de montage de chaque dispositif de support à l'intérieur de l'enceinte,
- une étape de fixation d'au moins un élément fonctionnel à un ergot de support prédéterminé de la chaîne d'un dispositif de support, en amont du boîtier de ce dernier par rapport à une direction de déplacement de la chaîne vers l'intérieur de l'enceinte,
- une étape optionnelle de fixation à au moins un autre ergot de support de la chaîne d'au moins un câble d'alimentation électrique et/ou de transfert d'information relié audit élément fonctionnel,
- une étape de déplacement de la chaîne du dispositif de support portant l'élément fonctionnel vers l'intérieur de l'enceinte de manière à positionner ledit au moins un élément fonctionnel en aval du boîtier, à une position prédéterminée à l'intérieur de l'enceinte.

L'étape de montage peut comprendre la fixation du dispositif de support, notamment du boîtier de support, à un système de distribution de particules solides. Un tel système de distribution peut comprendre un dispositif de maintien d'un dispositif de chargement en particules solides, ce dispositif de maintien étant agencé pour assurer le maintien du dispositif de chargement dans l'enceinte. En particulier, le système de distribution de particules solides peut être agencé de sorte que le dispositif de maintien et le dispositif de support de l'invention puissent être montés sur le dispositif de chargement de particules solides tout en étant déplaçables par rapport audit dispositif de chargement, tel que décrit par exemple dans la précédente demande WO2013186497.

L'étape de fixation peut être réalisée avant ou après l'introduction du dispositif de support à l'intérieur de l'enceinte. L'étape de fixation peut consister en une fixation rigide, autrement dit sans aucune liberté de mouvement, d'un élément fonctionnel sur un ergot de support. Une telle fixation rigide peut par exemple être obtenue par un collier de serrage maintenu par des vis, par vissage de l'élément fonctionnel directement sur l'ergot, ou tout autre moyen approprié.

L'étape de fixation peut aussi consister en une fixation autorisant un ou plusieurs degrés de liberté, par exemple au moyen d'un support approprié pour supporter directement l'élément fonctionnel ou pour supporter un câble relié à l'élément fonctionnel. Dans ce dernier cas, le support de câble peut maintenir le câble de manière suffisamment rigide pour permettre à celui-ci de supporter l'élément fonctionnel, l'élément fonctionnel se positionnant tout seul sous l'effet de la gravité.

L'étape de déplacement de la chaîne peut en outre consister en un déplacement de la chaîne manuel ou motorisé.

Dans la présente demande les termes « haut » « bas » « supérieur « inférieur » « vertical » « horizontal », « latéral » « dessus » « dessous » etc. sont définis au sens classique de ces termes (c'est-à-dire que la direction verticale est la direction du vecteur gravité, ce vecteur gravité étant orienté du haut vers le bas), pour un dispositif de support fixé à un système de distribution placé dans des conditions normales d'utilisation, c'est-à-dire avec son axe longitudinal orienté suivant la direction du vecteur gravité. Bien entendu, le dispositif de support ou le système est susceptible d'être orienté différemment, notamment lors de son transport.

Par sensiblement horizontal, longitudinal ou vertical, on entend une direction/un plan formant un angle d'au plus ±20°, voire d'au plus 10° ou d'au plus 5°, avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5°, d'une direction parallèle, perpendiculaire ou d'un angle droit.

L'invention sera mieux comprise en référence aux figures, lesquelles illustrent des modes de réalisation non limitatifs.
- La figure 1 est une représentation en perspective d'un système de distribution de particules équipé d'un dispositif de support selon un mode de réalisation de l'invention ;
- La figure 2 est une représentation en perspective du dispositif de support représenté figure 1 ;
- La figure 3 est une représentation en perspective partielle du dispositif de support représenté figure 1 ;
- La figure 4 est une vue de dessus d'une partie du dispositif de support représenté figure 1 ;
- La figure 5 est une vue de côté d'un axe de galet selon un mode de réalisation ;
- La figure 6 est une représentation en perspective d'un support d'élément fonctionnel selon un mode de réalisation ;
- Les figures 6a à 6e représentent des vues en perspective (fig. 6a-6d) ou de côté (fig.6e) des pièces formant le support représenté figure 6 ;
- La figure 7 est une vue de dessus d'un support de câble ;
- Les figures 7a à 7c sont des vues de côté (fig. 7a) ou en perspective (fig. 7b-c) des pièces du support de câble de la figure 7.

Des références identiques peuvent être utilisées pour désigner des éléments identiques ou similaires d'une figure à l'autre.

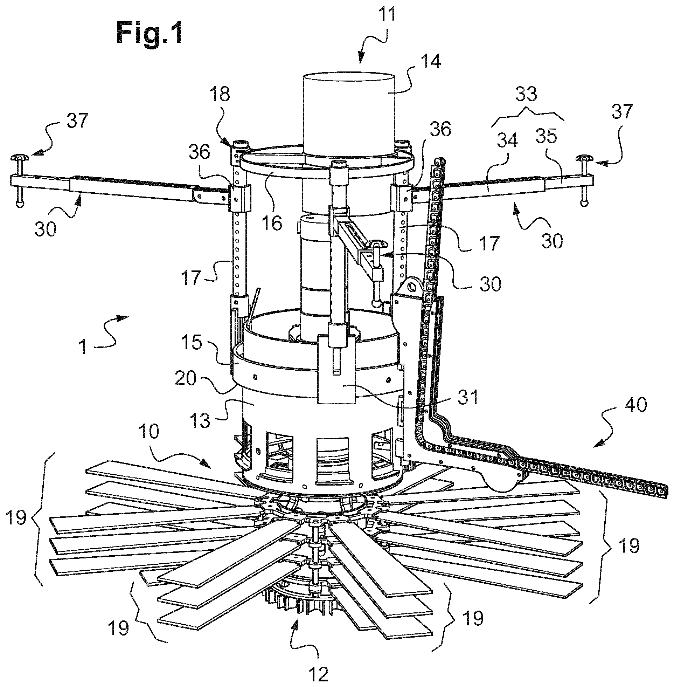

En référence à la figure 1, un système de distribution de particules solides 1 comprend un dispositif de chargement 10 conformé pour introduire des particules solides, par exemple des billes, des extrudés de catalyseur non représentés, ou autre, dans une enceinte, par exemple un réacteur (non représenté). Ce système de distribution 1 est similaire au système de distribution décrit dans le document WO2013/186497. Ses principaux éléments sont décrits ci-après.

Le dispositif de chargement 10 définit un passage pour la circulation de ces particules solides, depuis une entrée 11 jusqu'à une sortie 12.

Dans ce mode de réalisation, des pales 19, par exemple en forme de lanières, disposées à la sortie du dispositif de chargement 10, permettent de mieux répartir les particules solides dans le réacteur. Les pales 19 sont ici représentées dans la position sensiblement horizontale qu'elles occupent sous l'effet de la rotation lors du chargement de particules. Au repos, ces pales 19 sont orientées vers le bas.

Le dispositif de chargement 10 comprend un corps principal 13, ou fût, en métal, ainsi qu'une rehausse 14, destinée à l'alimentation en particules solides (non représentée) du dispositif de chargement. Cette rehausse 14 comprend une bague métallique inférieure 15, ainsi qu'une bague métallique supérieure 16. Cette bague supérieure 16 est fixée à un support de bague 18 monté sur des rallonges de pied 17 en métal à forme générale de tube creux.

La bague métallique inférieure 15, ici en forme de couronne métallique circulaire, est montée sur le dispositif de chargement 10 et solidarisée à ce dernier par vissage via des orifices 20.

Le système de distribution 1 comprend également trois dispositifs de maintien 30 montés sur la couronne circulaire 15. Chacun de ces dispositifs de maintien comprend une platine de fixation 31 montée sur la couronne circulaire 15 et supportant une rallonge de pied 17.

A cette rallonge de pied 17 est fixé un bras de fixation 33 réalisé en métal. Ce bras de fixation 33 comprend un coulisseau 34 et une rallonge de coulisseau 35, apte à coulisser à l'intérieur du coulisseau 34.

Dans cet exemple, le dispositif de maintien comprend, à l'extrémité du coulisseau 34, une bague de guidage 36 apte à être montée sur le tube de la rallonge de pied 17. Cette bague de guidage est percée d'un orifice pour le verrouillage en hauteur.

Ainsi, le bras 33 peut-il être inséré sur la rallonge de pied 17. Cette rallonge de pied 17 est percée d'orifices régulièrement espacés les uns des autres, de sorte que le réglage en hauteur de chaque bras 33 peut être effectué au moyen d'une goupille non représentée.

Tel que décrit dans le document WO2013/186497, les platines 31 et la couronne circulaire 15 présentent des formes complémentaires permettant l'accrochage de chaque platine 31 à la couronne circulaire 15, chaque platine pouvant en outre être verrouillée sur la couronne circulaire. Par ailleurs, chaque platine 31 peut coulisser sur la couronne circulaire 15, permettant un positionnement angulaire des bras 33 les uns par rapport aux autres.

Pour revenir à la figure 1, le système de distribution 1 comprend en outre trois dispositifs de support de capteur 40, dont un seul est représenté sur la figure 1 afin de ne pas trop surcharger la figure.

On peut prévoir davantage de dispositifs de support de capteur, par exemple cinq, ou moins de dispositifs supports de capteur, par exemple un seul. De manière générale, dans la présente demande, par « un », on entend « un ou davantage ».

Le dispositif de support 40 est fixé à la couronne circulaire 15 par exemple par une platine du même type que les platines 31 des dispositifs de maintien 30, notamment tel que décrit dans le document WO2013/186497.

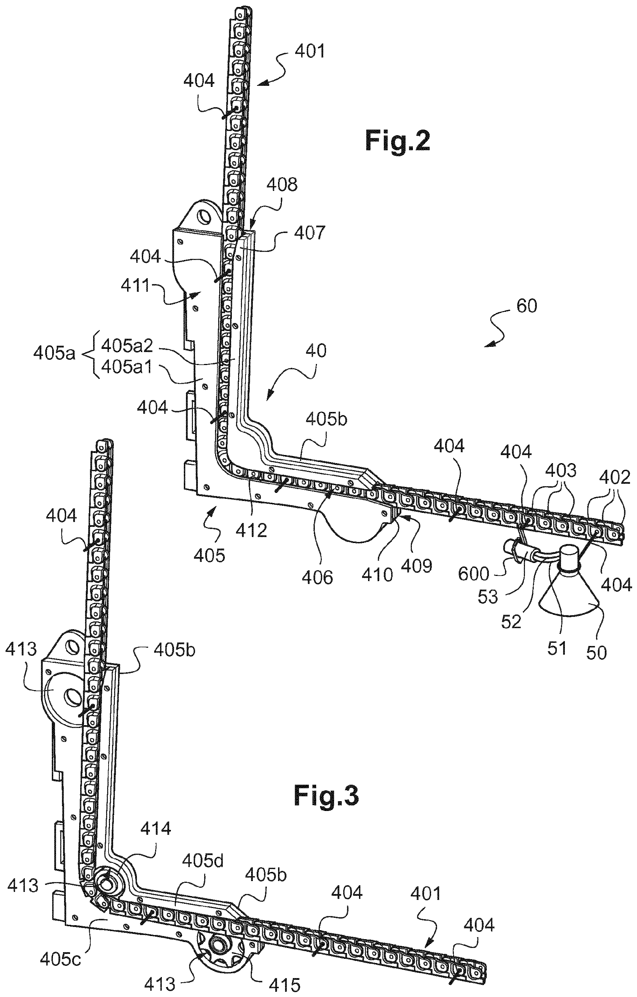

Le dispositif de support 40 est maintenant décrit en référence aux figures 2 à 7. Il comprend une chaîne de support 401 boutante formée d'une pluralité de maillons 402 articulés deux à deux par des galets 403. Les axes des galets sont parallèles les uns aux autres. Ces maillons 402 sont agencés de sorte que la chaîne 401 ne peut se courber que dans une seule direction depuis un état rectiligne. Cette courbure est obtenue par rotation des maillons autour des axes de galets. Cette chaîne de support est ainsi capable de supporter un élément fonctionnel 50, tel qu'un capteur. La chaîne de support 401 est généralement entièrement en métal.

En outre, la chaîne de support 401 est équipée de plusieurs ergots de support 404 solidaires chacun d'un maillon 402. Ces ergots de support 404 font saillie d'un seul côté de la chaîne, parallèlement à l'axe des galets 403 de maillon, tel que visible sur les figures 2 à 4.

Le dispositif de support 40 comprend également un boîtier de support fermé 405 pourvu d'un logement interne 406 présentant une première extrémité 407 débouchant sur une face d'entrée 408 du boîtier de support et une deuxième extrémité 409 débouchant sur une face de sortie 410 du boîtier de support. Ces deux faces d'entrée 408 et de sortie 410 sont distinctes. Elles sont ici sensiblement perpendiculaires l'une par rapport à l'autre et sensiblement perpendiculaires à la direction de déplacement de la chaîne au niveau des extrémités 407, 408 respectivement. Le logement interne 406 définit ainsi un chemin de chaîne sensiblement en forme de L. Ce chemin de chaîne reçoit et guide la chaine de support 401 depuis la face d'entrée 408 jusqu'à la face de sortie 410.

On notera que le boîtier 405 présente également une forme en L. Ce boîtier est fermé sur toutes ses faces. Les seules ouvertures étant les deux ouvertures réalisées sur les faces d'entrée 408 et de sortie 410 pour le passage de la chaîne et la rainure 412 décrite ci-après.

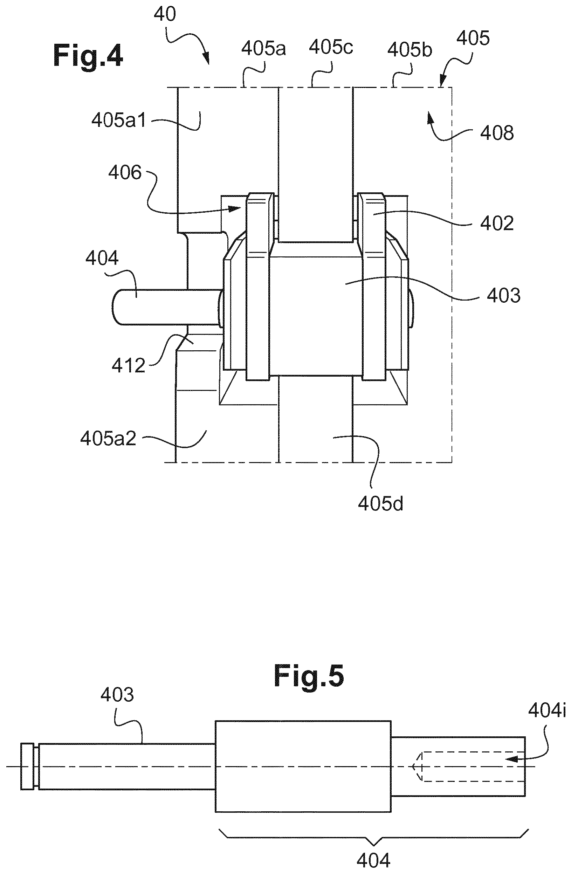

Selon l'invention, une face 411 du boîtier s'étendant sensiblement perpendiculairement aux axes des galets 403 reliant les maillons présente une rainure traversante 412, communiquant avec le logement interne 406. Cette rainure 412 s'étend sur toute la longueur du logement interne et ses dimensions, dans un plan sensiblement perpendiculaire aux galets 403, sont suffisantes pour ne laisser passer que les ergots de support 404. Dans le présent exemple, la rainure 412 présente une dimension, suivant une direction perpendiculaire à une longueur de la chaîne et aux axes des galets 403, suffisante pour laisser passer les ergots de support 404 et inférieure à la dimension d'un maillon 402, tel que visible plus particulièrement sur la figure 4. La rainure 412 s'étend ici en regard des ergots et est centrée sur ces derniers suivant une direction perpendiculaire aux ergots et à la longueur de la chaîne. De manière générale, quelque soit la forme du logement interne 406 et des ergots de support 404, on notera que sur sa face en regard de la rainure 412, un maillon 402 est au moins partiellement en regard contre une paroi du logement interne 406, de part et d'autre de la rainure 412 (voir fig.4).

Par ailleurs, les ergots de support 404 traversent la rainure 412 et font saillie hors du boîtier de support 405, plus précisément de la face 411 du boîtier, d'une longueur prédéterminée. A titre d'exemple, quelque soit la forme de l'ergot, cette longueur peut être de 1 à 10 cm, de préférence de 2 à 8 cm. L'invention n'est toutefois pas limitée à une longueur d'ergot particulière pourvu que cette longueur soit suffisante pour permettre de fixer un élément à l'ergot.

Dans l'exemple représenté, chaque ergot de support 404 s'étend dans le prolongement d'un galet 403 du maillon qui le supporte. En particulier, dans l'exemple représenté figure 5, cet ergot de support 404 est réalisé d'une pièce avec un galet 403, de préférence en métal.

Les ergots de support représentés ici sont de forme sensiblement cylindrique. L'invention n'est toutefois pas limitée à une forme particulière, un ergot pourrait présenter une forme conique ou bien présenter une section transversale non pas circulaire mais polygonale, par exemple en forme de quadrilatère, notamment régulier. Un ergot pourrait ainsi présenter deux faces planes opposées. Un ergot de support pourrait en outre être percé pour permettre le passage d'une vis, goupille ou autre. Ainsi, dans l'exemple représenté figure 5, l'extrémité de l'ergot 404 distante du galet 403 présente un alésage interne fileté 404i, de même axe que l'axe du galet 403 et de l'ergot 404. On comprend ainsi qu'il est possible de fixer un élément sur l'ergot de support 404 par simple vissage.

Un ergot de support pourrait également être fixé de façon réversible à un galet, autrement dit un ergot de support pourrait être amovible. Il pourrait alors être fixé à l'intérieur d'un galet par emboîtement, vissage ou autre (non représenté). A titre d'exemple, l'ergot pourrait être de forme cylindrique et présenter un filetage sur sa face externe coopérant avec un filetage correspondant interne au galet. En variante, l'ergot pourrait être fixé à l'intérieur du galet suite à une rotation quart de tour.

En outre, dans le présent exemple, les ergots sont tous de forme identique. On pourrait néanmoins prévoir des ergots de formes différentes, par exemple pour fixer différents types d'éléments fonctionnels ou autres accessoires.

Le boîtier 405 comprend ici deux carters 405a, 405b définissant entre eux le logement interne 406. Ces deux carters 405a, 405b sont assemblés suivant un plan perpendiculaire aux galets 403 de la chaîne. Ils maintiennent en outre entre eux un rail de guidage inférieur 405c et un rail de guidage supérieur 405d pour guider les galets 403 des maillons de la chaîne de support.

Afin de former la rainure 412, l'un des carters 405a est formé de deux parties distinctes 405a1 et 405a2 espacées d'une distance prédéterminée, correspondant à la largeur de la rainure 412 suivant une direction perpendiculaire à l'axe des galets 403.

Dans le présent exemple, les différentes parties du boîtier 405 sont assemblées les unes aux autres par vissage.

Tel que visible plus particulièrement sur la figure 3, le boîtier 405 peut en outre présenter des logements 413 pour recevoir un tambour de guidage 414 ou un pignon de guidage 415 pour guider et faciliter le déplacement de la chaîne. Le tambour 414 ou le pignon 415 sont montés à rotation autour d'un axe parallèle aux axes des galets 403.

Tel que visible sur la figure 2, un élément fonctionnel 50 est fixé à un ergot 404, par exemple au moyen d'un support (non représenté sur la figure 2). Cet élément fonctionnel 50 est ici un capteur apte à collecter des informations sur le chargement de l'enceinte. Dans le présent exemple, ce capteur est relié à un câble d'alimentation électrique 51 et à un câble de transfert d'information 52. Ces deux câbles 51, 52 sont ici réunis dans une gaine 53, représentée partiellement pour plus de clarté. La gaine 53 est fixée à un autre ergot 404 adjacent par un support de câble 600. Cette gaine 53 peut ainsi être maintenue le long de la chaîne 401 par fixation aux ergots 404, évitant ainsi que le ou les câbles ne perturbent le déplacement de la chaîne ou ne viennent se placer devant le capteur 50 ou d'autres éléments fonctionnels éventuellement fixés à la chaîne 401.

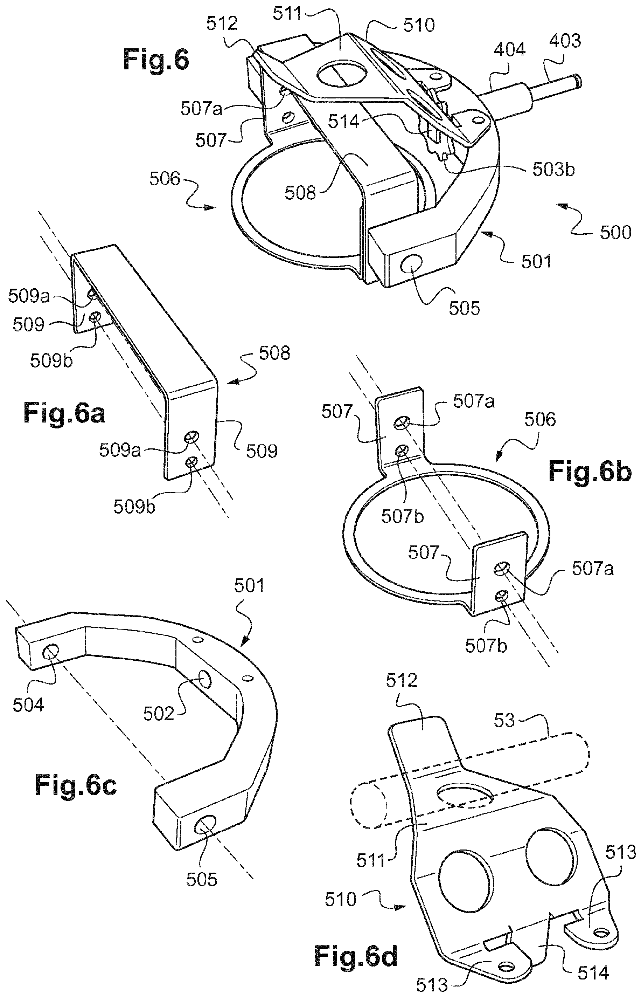

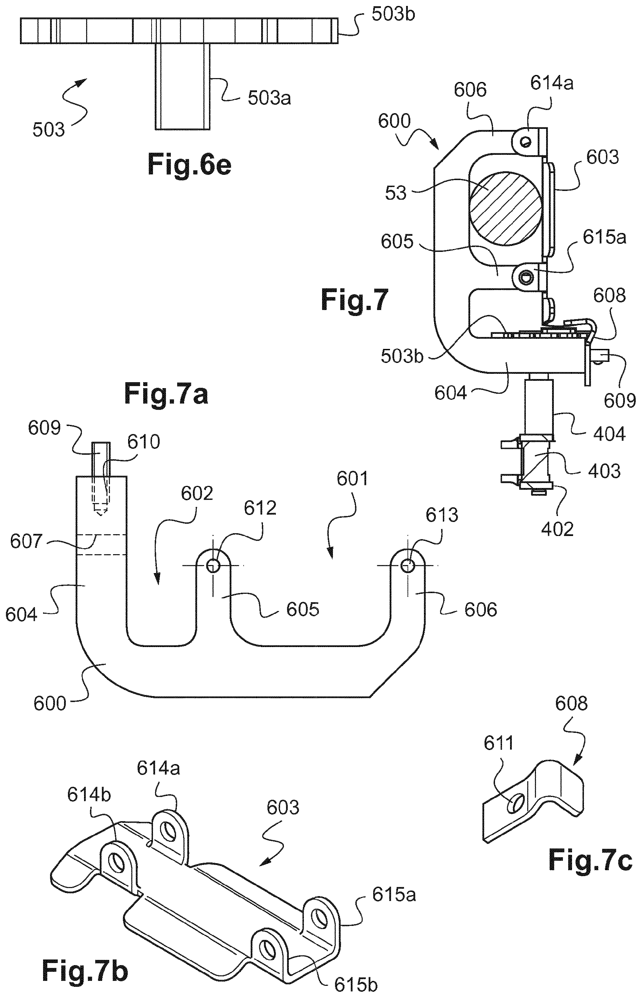

Le support utilisé pour fixer l'élément fonctionnel 50 à un ergot 404 peut être un simple collier de serrage ou un support plus complexe tel que décrit en référence aux figures 6 et 6a-6e.

La figure 6 représente un support d'élément fonctionnel 500 comprenant un arceau 501 agencé pour être fixé à l'ergot de support 404 à proximité de son centre.

Dans le mode de réalisation représenté, cet arceau 501 est percé d'un orifice 502 (fig. 6c) pour le passage d'une vis de fixation 503 (fig. 5). Dans cet exemple, la vis de fixation 503 présente une partie filetée 503a pouvant être vissée à l'intérieur de l'alésage 404i de l'ergot de support 404 et une partie 503b formant une molette et permettant de visser à la main la vis de fixation 503 (voir figures 6, 6e et 5). On notera que la molette est située du côté concave de l'arceau 501, la vis traversant ce dernier.

Sur l'arceau 501 est montée une pièce de fixation 506 de l'élément fonctionnel. A cet effet, dans l'exemple, l'arceau 501 présente deux orifices 504, 505 dont les axes sont confondus (fig.6c). La pièce de fixation 506 est elle-même pourvue de deux pattes de fixation 507 percées chacune de deux orifices 507a, 507b, les axes des orifices 507a, respectivement les axes des orifices 507b, étant confondus. La pièce de fixation 506 peut ainsi être fixée à l'arceau 501 par les orifices 507a (fig.6) ou 507b (non représenté). Dans l'exemple, la pièce de fixation 506 est en forme d'anneau, notamment conformée pour recevoir un élément fonctionnel. Ce dernier est ainsi introduit dans l'anneau 506 et repose sur ce dernier, sans qu'il soit nécessaire de percer l'élément fonctionnel. L'élément fonctionnel peut être maintenu en place par de simples vis venant en appui sur la surface de l'élément fonctionnel.

On notera que l'axe des orifices 504, 505 est ici perpendiculaire à l'axe de l'orifice 502 : il est ainsi possible de faire pivoter le support 500 autour de l'axe de l'orifice 502 et de choisir ainsi son orientation lors de sa fixation à l'ergot 404. De manière similaire, il est possible de faire pivoter la pièce de fixation 506 autour de l'axe des orifices 507a ou 507b et de choisir ainsi son orientation par rapport à l'arceau 501 lors de sa fixation à celui-ci. On comprend ainsi que la position de l'élément fonctionnel peut être choisie librement par rotation autour de ces deux axes.

Bien entendu, l'invention n'est pas limitée à une forme particulière de l'arceau 501 et de la pièce de fixation 506. En outre, ces derniers pourraient être fixés l'un à l'autre sans possibilité de réglage de leur position relative. Cette fixation pourrait être réalisée par tout moyen de fixation approprié (vissage, encliquetage, rivetage). Bien qu'il soit préférable que l'arceau 501 et la pièce de fixation 506 soient des pièces distinctes, ce qui permet d'utiliser une pièce de fixation 506 spécifique pour chaque élément fonctionnel, il est envisageable que la pièce de fixation 506 soit venue de matière avec l'arceau 501.

Dans l'exemple représenté, le support d'élément fonctionnel 500 comprend par ailleurs un autre arceau 508, ici en forme de U, monté sur l'arceau 501, en regard de la pièce de fixation 506. Dans cet exemple, l'arceau 508 présente deux ailes 509 percées chacune de deux orifices 509a, 509b, les axes des orifices 509a, respectivement les axes des orifices 510b, étant confondus. Cet arceau 508 permet de renforcer la pièce de fixation 506 et aussi de protéger la partie de l'élément fonctionnel située entre l'anneau de la pièce de fixation 506 et l'arceau 508.

Enfin, dans l'exemple, le support d'élément fonctionnel 500 comprend également un support de câble 510 fixé sur l'arceau 501. Ce support de câble 510 se présente sous la forme d'une plaque pliée, ici perforée pour plus de légèreté, dont l'extrémité distante de l'arceau 501 présente une partie plane 511 pour recevoir une portion du câble (ici de la gaine 53) et une partie 512 inclinée par rapport à la partie 511 pour retenir la portion de câble. Le support de câble 510 est fixée à l'arceau 501 par vissage via par exemple des pattes percées 513. Enfin, dans l'exemple, ce support de câble 510 présente une patte 514 repliée devant la molette 503b de la vis de fixation afin de retenir celle-ci. Autrement dit, la molette 503b est prise en sandwich entre l'arceau 501 et la patte 514.

Le support utilisé pour fixer le câble (ici la gaine 53) à un ergot 404 peut être un simple collier de serrage ou un support plus complexe tel que décrit en référence aux figures 7 et 7a, 7c.

La figure 6 représente un support de câble 600 comportant au moins un logement ouvert 601, deux logements ouverts 601, 602 dans l'exemple. Chaque logement 601, 602 présente une forme similaire à un U pour recevoir un ou plusieurs câbles ou gaines 53. Le ou les logements 601, 602 sont fermés par un élément de fermeture 603, de préférence amovible. Dans l'exemple, l'un des logements 602 définit un passage de section réduite par rapport à l'autre logement : il permet de maintenir rigidement un câble de sorte que ce dernier puisse supporter l'élément fonctionnel.

Ce support de câble 600 se présente ici sous la forme d'une plaque découpée en forme de peigne. Trois bras sensiblement parallèles 604, 605, 606 définissent les deux logements en forme de U. l'un des bras 604 d'extrémité sert à la fixation du support de câble 600 à l'ergot de support 404. A cet effet, il est percé d'un orifice 607 pour le passage d'une vis de fixation, par exemple la vis de fixation à molette 503 décrite en référence à la figure 5. Dans l'exemple représenté, le bras d'extrémité 604 est en outre équipé d'une plaque de retenue 608 de la molette 503b, cette plaque de retenue 608 étant fixée au support de câble 600 par une vis 609 traversant l'orifice 611 de la plaque de retenue 608 et vissée dans un alésage 610 du bras 604 (voir figures 7, 7a, 7c). La molette 503b est ici prise en sandwich entre la plaque de retenue 608 et le bras 604 (fig.7).

Chacun des autres bras 605, 606 est percé d'un orifice traversant 612, 613 pour la fixation de l'élément de fermeture 603. A cet effet, celui-ci présente une paire de pattes de fixation percées 614a, 614b ; 615a, 615b pour chaque bras 605, 606, l'extrémité de chaque bras étant emboîtée entre chaque paire de pattes. L'élément de fermeture 603 peut être maintenu en place par des goupilles ou des vis traversant les orifices 612, 613 et les plaques percées 614a,b, 615a,b.

Ainsi, dans l'exemple décrit, le support de câble 600 et le support d'élément fonctionnel 500 sont fixés à un ergot de support 404 par des moyens de fixation identiques, ici la vis de fixation à molette 503, réduisant les coûts de fabrication. En outre, l'utilisation d'une vis de fixation à molette permet de fixer à la main rapidement ces éléments de support.

L'ensemble formé par un dispositif de support 40 (ou plusieurs) et un ou plusieurs éléments fonctionnels 50 fait partie d'un système de suivi 60 de la distribution de particules solides à l'intérieur d'une enceinte.

Ce système de suivi 60 peut être installé à l'intérieur d'une enceinte tel que décrit ci-après.

Au cours d'une première étape (étape de montage), le ou les dispositifs de support 40 sont montés à l'intérieur de l'enceinte. Dans le présent exemple, chaque dispositif de support 40 est fixé à la couronne circulaire 15 du système de distribution 1 au moyen des platines 31. Le système de distribution 1 est lui-même fixé à l'enceinte, au moyen des dispositifs de maintien 30. Notamment à cet effet, les bras 33 peuvent comprendre à leur extrémité opposée à l'extrémité solidarisée aux rallonges de pied 17 des moyens de fixation au réacteur, par exemple des pieds rotulés 37 destinés à venir se poser sur un plateau du réacteur. Les dispositifs de support 40 peuvent être fixés au système de distribution 1 avant ou après l'installation de ce dernier dans l'enceinte.

Un ou plusieurs éléments fonctionnels sont alors fixés à chaque dispositif de support 40 au cours d'une étape de fixation. A cet effet, chaque élément fonctionnel 50 est fixé à un ergot de support. Cette fixation est de préférence réalisée en amont du boîtier 405 par rapport à une direction de déplacement de la chaîne 401 vers l'intérieur de l'enceinte. Ceci permet d'effectuer la fixation sur une partie de la chaîne plus facilement accessible notamment lorsque le dispositif de chargement est positionné à l'intérieur de l'enceinte. Optionnellement, les câbles 51, 52 d'alimentation et de collecte des informations sont également fixés aux ergots 404, notamment de sorte que les câbles, éventuellement rassemblés dans la gaine 53 longent la chaîne boutante 401.

La chaîne 401 peut ensuite être déplacée vers l'intérieur de l'enceinte de manière à positionner les éléments fonctionnels 50 en aval du boîtier 405, à une position prédéterminée à l'intérieur de l'enceinte. Les éléments fonctionnels sont alors situés sur la partie sensiblement horizontale de la chaîne 401, peu ou difficilement accessible lorsque le dispositif de chargement 10 est installé dans l'enceinte.

On comprend ainsi que l'on peut facilement positionner un élément fonctionnel à l'intérieur de l'enceinte au moyen d'un dispositif de support selon l'invention, ce positionnement étant par ailleurs précis. L'élément fonctionnel peut en outre être fixé toujours de la même manière, à la même position, d'une opération de suivi de remplissage à une autre.

## Revendications

1. Dispositif de support (40) d'au moins un élément fonctionnel (50), comprenant :
- une chaîne de support (401) boutante formée d'une pluralité de maillons (402) articulés deux à deux par des galets (403) dont les axes sont parallèles et agencés de sorte que la chaîne ne peut se courber que dans une seule direction depuis un état rectiligne,
- un boîtier de support (405) fermé pourvu d'un logement interne (406) présentant une première extrémité (407) débouchant sur une face d'entrée (408) du boîtier de support et une deuxième extrémité (409) débouchant sur une face de sortie (410) du boîtier de support, distincte de la face d'entrée, le logement interne (406) définissant un chemin de chaîne pour recevoir et guider la chaine de support depuis la face d'entrée jusqu'à la face de sortie,
- une face (411) du boîtier s'étendant sensiblement perpendiculairement aux axes des galets présente une rainure traversante (412) communiquant avec le logement interne (406), cette rainure (412) s'étendant sur toute la longueur de celui-ci et présentant des dimensions, dans un plan perpendiculaire aux axes des galets (403),
**caractérisé en ce que** :
- lesdites dimensions sont suffisantes pour ne laisser passer que l'(les) ergot(s) de support (404), ce(s) dernier(s) traversant la rainure (412) et faisant saillie hors du boîtier de support (405) d'une longueur prédéterminée
- la chaîne (401) est équipée d'au moins un ergot de support (404) solidaire d'un maillon (402), l'(es) ergot(s) de support saillant d'un seul côté de la chaîne, parallèlement aux axes des galets de maillon,
- la chaîne de support comporte au moins un support qui est un support d'élément fonctionnel (500),
- le support d'élément fonctionnel (500) comprend un arceau (501) fixé à l'ergot de support (404), dont les positions relatives peuvent être réglables suivant un degré de liberté avant fixation, et une pièce de fixation de l'élément fonctionnel (506) fixée à l'arceau (501), dont les positions relatives peuvent être réglables suivant un autre degré de liberté avant fixation.

2. Dispositif de support (40) selon la revendication 1, **caractérisé en ce que** ledit au moins un ergot de support (404) s'étend dans le prolongement d'un galet (403) du maillon qui le supporte.

3. Dispositif de support (40) selon la revendication 2, **caractérisé en ce que** ledit au moins un ergot de support (404) est réalisé d'une pièce avec un galet (403) de maillon.

4. Dispositif de support (40) selon la revendication 2, **caractérisé en ce que** ledit au moins un ergot de support (404) est fixé de façon amovible au galet (403) du maillon.

5. Dispositif de support (40) selon l'une quelconque des revendications 1 à 4, **caractérisé en ce que** la chaîne de support (401) comporte une pluralité d'ergots de support (404) répartis sur la longueur de la chaîne.

6. Dispositif de support (40) selon l'une quelconque des revendications 1 à 5, **caractérisé en ce que** le boîtier (405) comprend deux carters (405a, 405b) définissant le logement interne (406) et assemblés suivant un plan perpendiculaire aux axes des galets (403), lesdits carters (405a, 405b) maintenant entre eux au moins un rail de guidage inférieur (405c) et au moins un rail de guidage supérieur (405d) pour guider les galets, l'un des carters (405a) étant formé de deux parties distinctes (405a1, 405a2) espacées définissant entre elles la rainure (412).

7. Dispositif de support (40) selon l'une quelconque des revendications 1 à 6, **caractérisé en ce que** la chaîne de support comporte au moins un support qui est un support de câble (600).

8. Dispositif de support (40) selon la revendication 7, **caractérisé en ce que** le support de câble (600) comporte au moins un logement ouvert (601) fermé par un élément de fermeture (603).

9. Dispositif de support (40) selon l'une quelconque des revendications 1 à 8, **caractérisé en ce que** l'ergot de support (404) présente un alésage fileté (404i) d'axe confondu avec l'axe d'un galet (403) et **en ce que** ledit au moins un support (500, 600) est fixé à l'ergot de support par une vis, notamment une vis à molette (503).

10. Système de suivi (60) de la distribution de particules solides à l'intérieur d'une enceinte, comprenant :
au moins un dispositif de support (40) selon l'une quelconque des revendications 1 à 9,
au moins un élément fonctionnel (50) fixé à un ergot de support (404) prédéterminé de la chaîne de support d'un dispositif de support, ledit élément fonctionnel étant un capteur apte à collecter des informations sur le chargement de l'enceinte.

11. Système de suivi (60) selon la revendication 10, **caractérisé en ce que** ledit au moins un élément fonctionnel (50) est fixé rigidement à l'ergot de support (404), sans possibilité de mouvement par rapport à l'ergot de support.

12. Système de suivi selon la revendication 10 ou 11, **caractérisé en ce que** ledit au moins un élément fonctionnel (50) est relié à au moins un câble (51, 52) d'alimentation électrique et/ou de transfert d'information et **en ce que** le ou les câbles est/sont fixé(s) à au moins un autre ergot de support (404).

13. Procédé d'installation à l'intérieur d'une enceinte d'un système de suivi (60) de la distribution de particules solides selon l'une quelconque des revendications 10 à 12,
le procédé comprenant :
- une étape de montage de chaque dispositif de support (40) à l'intérieur de l'enceinte,
- une étape de fixation d'au moins un élément fonctionnel (50) à un ergot de support (404) prédéterminé de la chaîne d'un dispositif de support (40), en amont du boîtier (405) de ce dernier par rapport à une direction de déplacement de la chaîne vers l'intérieur de l'enceinte,
- une étape optionnelle de fixation à au moins un autre ergot de support (404) de la chaîne d'au moins un câble (51, 52) d'alimentation électrique et/ou de transfert d'information relié audit élément fonctionnel (50),
- une étape de déplacement de la chaîne du dispositif de support portant l'élément fonctionnel (50) vers l'intérieur de l'enceinte de manière à positionner ledit au moins un élément fonctionnel en aval du boîtier (405), à une position prédéterminée à l'intérieur de l'enceinte.

## Patentansprüche

1. Stützvorrichtung (40) für mindestens ein Funktionselement (50), die Folgendes umfasst:
- eine Schub-Stützkette (401), die aus einer Vielzahl von Kettengliedern (402) besteht, die paarweise durch Rollen (403) gelenkig miteinander verbunden sind, deren Achsen parallel sind und so angeordnet sind, dass sich die Kette aus einem geradlinigen Zustand nur in eine einzige Richtung krümmen kann,
- ein geschlossenes Stützgehäuse (405), das mit einer inneren Aufnahme (406) versehen ist, die ein erstes Ende (407) aufweist, das in eine Eingangsseite (408) des Stützgehäuses mündet, und ein zweites Ende (409), das in eine Ausgangsseite (410) des Stützgehäuses mündet, die sich von der Eingangsseite unterscheidet, wobei die innere Aufnahme (406) eine Kettenbahn definiert, um die Stützkette von der Eingangsseite zur Ausgangsseite aufzunehmen und zu führen,
- wobei eine Seite (411) des sich im Wesentlichen senkrecht zu den Achsen der Rollen erstreckenden Gehäuses eine durchlaufende Nut (412) aufweist, die mit der inneren Aufnahme (406) in Verbindung steht, wobei sich diese Nut (412) über die gesamte Länge derselben erstreckt und Abmessungen in einer Ebene senkrecht zu den Achsen der Rollen (403) aufweist,
**dadurch gekennzeichnet, dass**:
- die Abmessungen ausreichend sind, um nur den (die) Stützstift(e) (404) durchzulassen, wobei letztere(r) die Nut (412) durchläuft (durchlaufen) und um eine vorbestimmte Länge aus dem Stützgehäuse (405) hervorsteht (hervorstehen)
- die Kette (401) mit mindestens einem Stützstift (404) ausgestattet ist, der fest mit einem Kettenglied (402) verbunden ist, wobei der (die) Stützstift(e) nur auf einer Seite der Kette parallel zu den Achsen der Kettengliederrollen hervorsteht (hervorstehen),
- die Stützkette mindestens eine Stütze umfasst, die eine Funktionselementstütze (500) ist,
- die Funktionselementstütze (500) einen an dem Stützstift (404) befestigten Bügel (501) einschließen, dessen relative Positionen vor der Befestigung gemäß einem Freiheitsgrad einstellbar sein können, und ein am Bügel (501) befestigtes Befestigungsteil (506) für das Funktionselement, dessen relative Positionen vor der Befestigung gemäß einem weiteren Freiheitsgrad einstellbar sind.

2. Stützvorrichtung (40) nach Anspruch 1, **dadurch gekennzeichnet, dass** sich der mindestens eine Stützstift (404) in die Verlängerung einer Rolle (403) des Kettenglieds erstreckt, das ihn stützt.

3. Stützvorrichtung (40) nach Anspruch 2, **dadurch gekennzeichnet, dass** der mindestens eine Stützstift (404) einstückig mit einer Rolle (403) eines Kettenglieds ausgebildet ist.

4. Stützvorrichtung (40) nach Anspruch 2, **dadurch gekennzeichnet, dass** der mindestens eine Stützstift (404) abnehmbar an der Rolle (403) des Kettenglieds befestigt ist.

5. Stützvorrichtung (40) nach einem der Ansprüche 1 bis 4, **dadurch gekennzeichnet, dass** die Stützkette (401) eine Vielzahl von Stützstiften (404) umfasst, die über die Länge der Kette verteilt sind.

6. Stützvorrichtung (40) nach einem der Ansprüche 1 bis 5, **dadurch gekennzeichnet, dass** das Gehäuse (405) zwei Gehäuseelemente (405a, 405b) einschließt, welche die innere Aufnahme (406) bilden und in einer Ebene senkrecht zu den Achsen der Rollen (403) miteinander zusammengebaut sind, wobei die Gehäuseelemente (405a, 405b) zwischen sich mindestens eine untere Führungsschiene (405c) und mindestens eine obere Führungsschiene (405d) zum Führen der Rollen halten, wobei eines der Gehäuseelemente (405a) aus zwei unterschiedlichen, voneinander beabstandeten Teilen (405a1, 405a2) gebildet ist, die zwischen sich die Nut (412) definieren.

7. Stützvorrichtung (40) nach einem der Ansprüche 1 bis 6, **dadurch gekennzeichnet, dass** die Stützkette mindestens eine Stütze umfasst, die eine Kabelstütze (600) ist.

8. Stützvorrichtung (40) nach Anspruch 7, **dadurch gekennzeichnet, dass** die Kabelstütze (600) mindestens eine offene Aufnahme (601) umfasst, die durch ein Verschlusselement (603) verschlossen ist.

9. Stützvorrichtung (40) nach einem der Ansprüche 1 bis 8, **dadurch gekennzeichnet, dass** der Stützstift (404) eine Gewindebohrung (404i) aufweist, deren Achse mit der Achse einer Rolle (403) zusammenfällt, und dass der mindestens eine Träger (500, 600) mit einer Schraube, insbesondere einer Rändelschraube (503), am Stützstift befestigt ist.

10. System (60) zur Nachverfolgung der Verteilung von Feststoffpartikeln im Inneren eines Behälters, das Folgendes umfasst:
mindestens eine Stützvorrichtung (40) nach einem der Ansprüche 1 bis 9,
mindestens ein an einem vorbestimmten Stützstift (404) der Stützkette einer Stützvorrichtung befestigtes Funktionselement (50), wobei das Funktionselement ein Sensor ist, der dazu geeignet ist, Informationen über das Beladen des Behälters zu erfassen.

11. System (60) zur Nachverfolgung nach Anspruch 10, **dadurch gekennzeichnet, dass** das mindestens eine Funktionselement (50) starr an dem Stützstift (404) befestigt ist, ohne dass eine Bewegung in Bezug auf den Stützstift möglich ist.

12. System zur Nachverfolgung nach Anspruch 10 oder 11, **dadurch gekennzeichnet, dass** das mindestens eine Funktionselement (50) an mindestens ein Kabel (51, 52) zur Stromversorgung und/oder Informationsübertragung angeschlossen ist und dass das oder die Kabel an mindestens einem weiteren Stützstift (404) befestigt ist (sind).

13. Verfahren zum Einbau eines Systems (60) zur Nachverfolgung der Verteilung von Feststoffpartikeln in einen Behälter nach einem der Ansprüche 10 bis 12,
wobei das Verfahren Folgendes umfasst:
- einen Schritt zur Montage jeder Stützvorrichtung (40) im Inneren des Behälters,
- einen Schritt zur Befestigung mindestens eines Funktionselements (50) an einem vorbestimmten Stützstift (404) der Kette einer Stützvorrichtung (40), dem Gehäuse (405) der letzteren vorgeschaltet in Bezug auf eine Bewegungsrichtung der Kette zum Inneren des Gehäuses hin,
- einen optionalen Schritt zur Befestigung an mindestens einem weiteren Stützstift (404) der Kette mindestens eines an das Funktionselement (50) angeschlossenen Stromversorgungs- und/oder Informationsübertragungskabels (51, 52),
- einen Schritt zur Bewegung der Kette der das Funktionselement (50) tragenden Stützvorrichtung zum Inneren des Behälters, um das mindestens eine Funktionselement dem Gehäuse (405) nachgeschaltet an einer vorbestimmten Position im Inneren des Behälters zu positionieren.

## Claims

1. A support device (40) for at least one functional element (50) comprising:
- an abutting support chain (401) formed by a plurality of links (402) articulated two-by-two by rollers (403) the axes of which are parallel and arranged so that the chain can only curve, from the straight state, in only one direction,
- a closed support box (405) equipped with an internal housing (406) having a first end (407) opening out onto an inlet face (408) of the support box and a second end (409) opening out onto the outlet face (410) of the support box, distinct from the inlet face, the internal housing (406) defining a chain path for receiving and guiding the support chain from the inlet face up to the outlet face,
- a face (411) of the box extending substantially perpendicularly to the axes of the rollers has a crossing groove (412) communicating with the internal housing (406), said groove (412) extending over the whole length thereof and having dimensions, in a plane perpendicular to the axes of the rollers (403),
**characterized in that**:
- said dimensions are sufficient for only letting pass the support lug(s) (404), the latter crossing the groove (412) protruding outside the support box (405) by a predetermined length
- the chain (401) is equipped with at least one support lug (404) attached to a link (402), the support lug(s) protruding from only one side of the chain, parallel to the axes of the link rollers,
- the support chain includes at least one support which is a functional support element (500),
- the functional support element (500) comprises an arc (501) fastened to the support lug (404) the relative positions of which can be adjusted depending on the degree of freedom prior to fastening, and a fastening part of the functional element (506) fastened to the arc (501), the relative positions of which can be adjusted depending on the degree of freedom prior to fastening.

2. The support device (40) according to claim 1, **characterized in that** said at least one support lug (404) extends into the extension of the link roller (403) that supports the support lug.

3. The support device (40) according to claim 2, **characterized in that** the at least one support lug (404) is produced in one piece with a link roller (403).

4. The support device (40) according to claim 2, **characterized in that** the at least one support lug (404) is fastened removably to the link roller (403).

5. The support device (40) according to any of claims 1 to 4, **characterized in that** the support chain (401) includes a plurality of support lugs (404) distributed over the length of the chain.

6. The support device (40) according to any of claims 1 to 5, **characterized in that** the box (405) comprises two casings (405a, 405b) defining the internal housing (406) and assembled along the plane perpendicular to the axes of the rollers (403), said casings (405a, 405b) holding therebetween at least one lower guide rail (405c) and at least one upper guide rail (405d) for guiding the rollers, one of the casings (405a) being consisting of two distinct spaced parts (405a1, 405a2) defining therebetween the groove (412).

7. The support device (40) according to any of claims 1 to 6, **characterized in that** the support chain includes at least one support which is a cable support (600).

8. The support device (40) according to claim 7, **characterized in that** the cable support (600) includes at least one open housing (601) closed by a closing element (603).

9. The support device (40) according to any of claims 1 to 8, **characterized in that** the support lug (404) has a threaded bore (404i) with an axis coinciding with the axis of the roller (403) and **in that** said at least one support (500, 600) is fastened to the support lug by a screw, in particular a thumb screw (503).

10. A monitoring system (60) for monitoring the distribution of solid particles within a chamber comprising:
at least one support device (40) according to any of the claims 1 to 9,
at least one functional element (50) fastened to a predetermined support lug (404) of the support chain or a support device, said functional element being a sensor apt to collect information on the loading of the chamber.

11. The monitoring system (60) according to claim 10, **characterized in that** said at least one functional element (50) is rigidly fastened to the support lug (404) without the possibility of movement with respect to the support lug.

12. The monitoring system according to claim 10 or 11, **characterized in that** said at least one functional element (50) is connected to at least one cable (51, 52) for electrical supply and/or for the transfer of information and **in that** the cable or cables is/are fastened to at least one other support lug (404).

13. A method for installing, inside a chamber, a monitoring system (60) for monitoring the distribution of solid particles according to any of the claims 10 to 12,
the method comprising:
- a step of mounting each support device (40) within the chamber,
- a step of fastening at least one functional element (50) to a predetermined support lug (404) of the chain of a support device (40), upstream of the box (405) of the latter with respect to a direction of movement of the chain towards the inside of the chamber,
- an optional step of fastening to at least one other support lug (404) of the chain, at least one cable (51, 52) for electrical supply and/or for the transfer of information, said cable being connected to said functional element (50),
- a step of movement of the chain of a support device bearing the functional element (50) towards the interior of the chamber so as to position said at least one functional element upstream of the box (405), at a predetermined position inside the chamber.
